# EUROPÄISCHE PATENTSCHRIFT

(11) **EP 2 694 451 B1**
(45) Veröffentlichungstag und Bekanntmachung des Hinweises auf die Patenterteilung: **22.02.2017**
(21) Anmeldenummer: 12715871.5
(22) Anmeldetag: 28.03.2012
(51) Int. Cl.: C04B 41/00, C04B 41/90, C04B 35/573, C04B 35/634, H01C 17/02, H01C 17/20, H01C 17/30, H05B 3/14, H05B 3/42, H05B 3/48, C04B 111/00, C04B 41/52, H01C 3/20

(54) **VERFAHREN ZUR HERSTELLUNG EINES WIDERSTANDSHEIZELEMENTS SOWIE WIDERSTANDSHEIZELEMENT**
RESISTANCE HEATING ELEMENT AND ITS PROCESS OF MANUFACTURE
ELEMENT CHAUFFANT A RESISTANCE ET SON PROCEDE DE PREPARATION

(30) Priorität: 06.04.2011 DE 102011006850
(43) Veröffentlichungstag der Anmeldung: 12.02.2014
(73) Patentinhaber: Schunk Kohlenstofftechnik GmbH, 35452 Heuchelheim (DE)
(72) Erfinder: NAUDITT, Gotthard, 35625 Hüttenberg (DE); WEISS, Roland, 35625 Hüttenberg (DE); SCHÖNFELD, Jeremias, 35625 Hüttenberg (DE)
(74) Vertreter: advotec.
(86) Internationale Anmeldenummer: PCT/EP2012/055462
(87) Internationale Veröffentlichungsnummer: WO 2012/136527

(56) Entgegenhaltungen:
- EP-A2- 0 864 548
- DE-A1- 2 310 148
- DE-A1- 19 835 378
- US-A- 2 941 962
- US-A1- 2008 143 005

## Beschreibung

Die Erfindung betrifft ein Verfahren zur Herstellung eines Widerstandsheizelements mit den Merkmalen des Anspruchs 1 sowie ein Widerstandsheizelement mit den Merkmalen des Anspruchs 11.

Widerstandsheizelemente werden regelmäßig als Heizelemente für eine thermische Analyse in sogenannten DSC-Öfen eingesetzt (Dynamische-Differenzkalorimetrie Öfen). Die bekannten Widerstandsheizelemente sind daher rohrförmig und einstückig ausgebildet und werden an ihrer Unterseite an einer Anode und einer Kathode bzw. Anschlussflächen kontaktiert. Eine Wandung des Widerstandsheizelements ist mit zwei Schlitzen versehen, die spiralförmig ausgebildet sind und so Heizwendeln des Widerstandsheizelements ausbilden. Im Bereich der Heizwendeln des Widerstandsheizelements wird eine Temperatur von bis zu 1650°C erreicht. Dabei soll ein Glühbild möglichst homogen über den Bereich der Heizwendeln verteilt sein. Weiter ist eine hohe Reinheit des Materials des Widerstandsheizelements von großer Wichtigkeit, da beispielsweise bei einer Reinheitsbestimmung von Proben im DSC-Ofen unerwünschte Zusatzstoffe aus dem Widerstandsheizelement herausdiffundieren und eine Messung verfälschen könnten.

Die bekannten Widerstandsheizelemente sind im Wesentlichen aus Siliziumcarbid gebildet. Eine Herstellung eines Widerstandsheizelements erfolgt durch eine Ausbildung eines Materialrohlings aus einem Faserwerkstoff, wie zum Beispiel Kohlenstofffasern, dessen Formstabilisierung mittels Harz mit abschließender Pyrolyse sowie einer Infiltration von Silizium, um ein Widerstandsheizelement aus Siliziumcarbid zu erhalten. Auch können sich Risse durch insbesondere eine inhomogene Verteilung von Silizium im Formkörper ergeben. Dadurch wird auch eine verminderte Stabilität im Betriebszustand des Widerstandsheizelements bewirkt, da es zu einer ungleichen Temperaturverteilung im Widerstandsheizelement durch die inhomogenen Materialkonzentrationen kommt. Weiter ist es bekannt, einen zylindrischen Formkörper zur Ausbildung eines SiSiC-Widerstandsheizelements durch ein Schlickerverfahren auszubilden. Dabei muss, um eine gewünschte Heizwendelstruktur auszubilden, ein im Schlickerverfahren ausgebildeter Grünkörper bearbeitet werden. Eine geringe Festigkeit des Grünkörpers schränkt dabei die Bearbeitungsmöglichkeiten erheblich ein, so dass durch das Schlickerverfahren keine vergleichsweise filigranen Heizwendeln hergestellt werden können. Ein weiterer Nachteil des bekannten Verfahrens stellt das freie Silizium des mit diesem Verfahren hergestellten Widerstandsheizelements dar, da durch das freie Silizium, welches aus dem Widerstandsheizelement herausdiffundieren kann, eine maximale Einsatztemperatur auf ca. 1400°C beschränkt ist.

Aus der US 2 941 962 A ist ein Widerstandsheizelement aus Siliziumcarbid bekannt, welches im Wesentlichen eine homogene Verteilung von Siliziumcarbid aufweist.

Die US 2008/0143005 A1 offenbart ein Verfahren zur Herstellung eines Kompositmaterials, wobei ein Formkörper aus Kohlenstofffaserfilz siliziert wird. Dabei werden zunächst Kohlefasermatten in einem Stapel angeordnet und mittels einer Nadel zu einem "Filz" verarbeitet. Nach einer Abscheidung von pryrolytischen Kohlenstoff auf dem so ausgebildeten Faserkörper erfolgt eine Infiltration mit flüssigem Silizium. Der Faserkörper weist eine inhomogene Verteilung von Fasern auf, da dieser aus einer Stapelanordnung von unidirektionalen Kohlefasermatten gebildet ist. Bei der Infiltration mit flüssigem Silizium wird Kohlenstoff in Siliziumcarbid umgewandelt. Das Kompositmaterial ist dann aus nicht in Siliziumcarbid umgewandelten Kohlenstofffasern mit einer Matrix aus Siliziumcarbid gebildet.

Die DE 23 10 148 zeigt ein Widerstandsheizelement mit einer rohrförmigen Gestalt aus Siliziumcarbid, welches durch Sintern hergestellt wird und in Anschlussbereichen freies Silizium enthalten soll.

Die EP 0 864 548 A2 beschreibt die Herstellung eines Verbundwerkstoffkörpers, bei der Prepregabfälle aus Graphitfasern und Kunstharz verpresst und carbonisiert sowie graphitiert werden. Ein so ausgebildeter Körper wird zerkleinert und mit einem kohlenstoffhaltigen Binder, z. B. Kunstharz oder Pech, gemischt sowie zu einem Formkörper verpresst. Der Formkörper wird carbonisiert und nachfolgend siliziert. Insgesamt werden so auf den Kohlenstofffasern zwei Schichten ausgebildet, wobei nur die äußere Kohlenstoffschicht der Kohlenstofffasern bzw. des Formkörpers zu Siliziumcarbid umgesetzt wird, da die Kohlenstofffasern durch ihre Graphithülle geschützt werden.

DE 19835378 A1 beschreibt ein beheizbares Flächenelement aus mit C-Fasern verstärktem SiC, das als Widerstandsheizelement benutzt wird. Dabei werden C-haltige Fasern oder Glasfasern in Vlies- oder Filzform mit einem Harzbindemittel getränkt, bei etwa 180°C in eine Form gepresst, bei ca. 1000°C karbonisiert und in einer anschliessenden Graphitierungsglühung in Graphit überführt. Der so entstandene Grünling wird nach einer endformnahen Bearbeitung mit Si bei ca. 1400°C infiltriert und bei einem weiteren Aufheizen auf ca. 1900°C kommt es zu einer Reaktion bei der SiC entsteht.

Der vorliegenden Erfindung liegt daher die Aufgabe zu Grunde, ein Verfahren zur Herstellung eines Widerstandsheizelements bzw. ein Widerstandsheizelement für einen DSC-Ofen vorzuschlagen, welches die aus dem Stand der Technik bekannten Nachteile vermeidet.

Diese Aufgabe wird durch ein Verfahren mit den Merkmalen des Anspruchs 1 und ein Widerstandsheizelement mit den Merkmalen des Anspruchs 11 gelöst.

Bei dem erfindungsgemäßen Verfahren zur Herstellung eines Widerstandsheizelements, weist das Widerstandsheizelement eine rohrförmige Gestalt auf, wobei das Widerstandsheizelement einstückig ausgebildet ist und wobei das Widerstandsheizelement aus Siliziumcarbid gebildet ist, wobei das Verfahren folgende Schritte umfasst:
- Ausbildung eines einstückigen Formkörpers aus Fasern eines Faserwerkstoffes, wobei die Fasern eine unstrukturierte Faserorientierung aufweisen, wobei der Formkörper aus Faserwerkstoff aus einem Filz gebildet wird, wobei der Filz ein Nadelfilz ist, wobei der Formkörper einen runden Rohrquerschnitt aufweist, wobei der Formkörper eine homogene Verteilung von Fasern aufweist,
- Imprägnierung des Formkörpers mit einem Matrixwerkstoff,
- Härtung des Matrixwerkstoffes,
- Pyrolyse der Werkstoffe des Formkörpers,
- Silizierung des Formkörpers, wobei der Formkörper zu dem Widerstandsheizelement ausgebildet wird.

Dadurch dass der Formkörper aus Fasern eines Faserwerkstoffes mit einer unstrukturierten Faserorientierung einstückig ausgebildet ist, werden Materialanhäufungen von Fasern, die beispielsweise beim Wickeln eines Formkörpers entstehen können, vermieden. Eine Materialschwächung, wie beim Schlickerverfahren und somit Rissbildung bei einer Herstellung des Formkörpers bzw. des Widerstandsheizelements wird so wirkungsvoll vorgebeugt. Weiter enthält das so hergestellte Widerstandsheizelement im Wesentlichen kein freies Silizium, wodurch es sich für eine Verwendung bei über 1400°C besonders gut eignet.

Erfindungsgemäß wird der Formkörper aus einem Faserwerkstoff aus einem Filz gebildet. Der Formkörper bzw. das Widerstandsheizelement kann dann besonders kostengünstig und einfach hergestellt werden. So kann auf ein aufwendiges Wickeln des Formkörpers bzw. des Widerstandsheizelements oder auf eine Bearbeitung eines Quaderförmigen Halbzeugs verzichtet werden, da der Faserwerkstoff über den gesamten Querschnitt des Formkörpers eine gleichmäßig unstrukturierte Faserorientierung aufweist. Insbesondere liegt bei einem Filz keine besondere Raumorientierung der Fasern vor.

Erfindungsgemäß wird ein Nadelfilz verwendet, wodurch der Vorteil erzielbar ist, dass auch Kunststofffasern zu dem Filz verarbeitet werden können. Im Gegensatz zu Naturfasern bedarf es bei Kunststofffasern einer Ausbildung eines mechanischen Zusammenhalts der ungeordneten Fasern durch Vernadelung.

Der Formkörper aus Faserwerkstoff weist erfindungsgemäß einen runden Rohrquerschnitt auf. So kann der Formkörper bereits vor einer Imprägnierung die gewünschte Form des Widerstandsheizelements aufweisen. Auch ist es denkbar, dass dann auf eine mechanische Bearbeitung des Formkörpers im weiteren Herstellungsprozess verzichtet werden kann. Vorzugsweise kann ein kreisförmiger Rohrquerschnitt ausgebildet werden, da ein nahtloser Formkörper dann einfach auf einem Dorn ausgebildet werden kann. Grundsätzlich kann der Formkörper jedoch jede gewünschte rohrförmige Gestalt aufweisen. So ist zwar das Widerstandsheizelement durch Verkleben von Faserfilzplattenmaterial relativ kostengünstig herzustellen, jedoch können während des Herstellungsprozesses Materialfehler auftreten. So können beim nachfolgenden Verfahrensschritt der Silizierung Risse im Bereich der vorherigen Klebeverbindungen entstehen, wobei die Risse nicht ohne Weiteres optisch erkennbar sind. Auch wenn eine mechanische Bearbeitung des dann quaderförmigen Formkörpers durch Ausbildung einer Durchgangsbohrung und eines Zylinders erfolgt, kann es zu Brüchen im Bereich der späteren Heizwendel kommen. Die Brüche können dann auch im Bereich der Klebeverbindungen der Faserfilzplatten liegen. Eine Verwendung des Formkörpers mit dem runden Rohrquerschnitt vermeidet diese Nachteile.

Um eine gleichmäßige Verteilung von Siliziumcarbid und Silizium im Widerstandsheizelement zu erhalten, weist der Formkörper aus Faserwerkstoff erfindungsgemäß eine homogene Verteilung von Fasern auf. So kann eine unerwünschte Materialanhäufung von beispielsweise Silizium zwischen aus Siliziumcarbid bestehenden Faserstrukturen vermieden werden. Eine Rissbildung in Folge von Inhomogenitäten kann so vermieden werden.

Besonders vorteilhaft ist es, wenn der Faserwerkstoff aus den Materialien Polyacrylnitril, Kohlenstoff, Kynol, Viskose, Siliziumoxid, Siliziumcarbid, Aramid oder ähnlichen Fasern oder Kombinationen derartiger Fasern ausgebildet wird. Vorzugsweise kann eine Mischung aus Aramid und Polyacrylnitrilfasern (Aramid-Pan-Ox-Faser) verwendet werden. Diese Fasern sind besonders einfach zu einem Filz verarbeitbar.

Auch ist es vorteilhaft, wenn der Matrixwerkstoff aus Harzen aus den Materialien Phenol, Epoxid, Polyimid, Furan, Isocyanat, Thermoplaste, Polyester oder Vinylester oder Kombinationen derartiger Harze ausgebildet wird. Bevorzugt können Phenolharze als Matrixwerkstoff verwendet werden, da diese besonders einfach verarbeitbar sind.

Nach dem Verfahrensschritt der Pyrolyse der Werkstoffe des Formkörpers kann eine Hochtemperaturbehandlung des Formkörpers erfolgen. Die Pyrolyse kann in einem Temperaturbereich von 280 bis 1200°C und die Hochtemperaturbehandlung in einem Temperaturbereich von 1200 bis 2400°C durchgeführt werden. Die Hochtemperaturbehandlung kann unter anderem zum Abbau von Sauerstoff und Stickstoff im Formkörper dienen und unter Vakuum oder Schutzgas durchgeführt werden. Mittels der Hochtemperaturbehandlung können insbesondere durch die Prozessschritte bedingte Maßabweichungen des Formkörpers minimiert werden.

Weiter kann vorgesehen sein, vor oder nach der Pyrolyse eine mechanische Bearbeitung des Formkörpers durchzuführen. Dabei kann bereits eine abschließende Gestalt des Widerstandsheizelements durch die mechanische Bearbeitung ausgebildet werden. So kann beispielsweise bei dem Formkörper mit einem runden Rohrquerschnitt ein Innendurchmesser des Formkörpers weiter aufgebohrt oder ausgedreht sowie ein Zylinder bzw. Außendurchmesser auf beispielsweise einer Drehmaschine geschliffen werden, so dass eine gleichmäßige Wandstärke des Formkörpers von beispielsweise bis zu 1 mm ausgebildet wird. Insbesondere durch eine hohe mechanische Stabilität des Formkörpers kann das Verfahren so auch eine Herstellung filigraner Heizwendeln ermöglichen. Weiter können in den so bearbeiteten Formkörper spiralförmige Schlitze gefräst werden, derart, dass eine spätere Heizwendel des Widerstandsheizelements ausgebildet wird. In einem Fußbereich bzw. zwischen Anschlussflächen des Formkörpers bzw. Widerstandsheizelements können die Schlitze als überbrückende Stege ausgebildet sein, die eine Stabilität des Formkörpers während des Herstellungsprozesses sicherstellen. Diese Stege können nach Ausbildung des Widerstandsheizelements einfach durchtrennt und somit entfernt werden.

Nach oder während der Silizierung kann eine Desilizierung des Widerstandsheizelements erfolgen. Um ein porenfreies Widerstandsheizelement zu erhalten, kann die Silizierung als Kapillarsilizierung (liquid silicon infiltration) durchgeführt werden. Dabei erfolgt eine Infiltration von Silizium in das Kohlenstoffmaterial des Formkörpers über Dochte. Die Desilizierung bewirkt anschließend ein Entfernen von überschüssigem Silizium.

Um einen Austritt freien Siliziums während eines Betriebes des Widerstandsheizelements zu verhindern, kann zusätzlich nach der Desilizierung eine CVD-Beschichtung (chemische Gasphasenabscheidung) des Widerstandsheizelements mit Siliziumcarbid erfolgen. Bei der CVD-Beschichtung wird bei beispielsweise 700 bis 1500C° eine Siliziumcarbidschicht auf das Widerstandsheizelement aufgebracht. Die Siliziumcarbidschicht umgibt das Widerstandsheizelement im Wesentlichen vollständig, so dass eventuell im Material des Widerstandsheizelements eingeschlossenes Silizium nicht aus diesem austreten kann.

Eine besonders gute Kontaktierung des Widerstandsheizelements mit Anschlusskontakten kann erzielt werden, wenn nach der Desilizierung oder der CVD-Beschichtung Anschlussflächen des Widerstandsheizelements mittels Flammspritzen beschichtet werden. Durch thermisches Spritzen von pulverförmigem Aluminium können die Anschlussflächen so mit einer elektrisch gut kontaktierbaren Aluminiumschicht versehen werden. Aluminium kann mittels Flammspritzen gut verarbeitet werden und schmilzt während des Betriebes des Widerstandsheizelements von diesem nicht ab.

Die Imprägnierung des Formkörpers mit einem Matrixwerkstoff, wie beispielsweise einem Harz, kann drucklos oder mittels Vakuuminfusion erfolgen. Beispielsweise kann der Formkörper durch Eintauchen in eine Wanne mit einem Harz mit diesem imprägniert werden. Auch kann die Imprägnierung mit dem Harz unter Vakuum erfolgen, so dass eventuell im Formkörper befindliche Lufteinschlüsse entfernt werden.

Weiter kann es vorteilhaft sein, wenn eine Verdichtung des imprägnierten Formkörpers vor der Härtung des Matrixwerkstoffes erfolgt. Die Verdichtung des Formkörpers kann beispielsweise in einem Autoklaven durchgeführt werden. Wenn der Formkörper dann beispielweise schon mit Harz imprägniert ist, kann durch ein Vakuum überschüssiges Harz beseitigt werden. Auch ist es möglich den imprägnierten Formkörper mittels eines Schrumpfschlauches oder Spannbänder gleichmäßig mechanisch zu verdichten bzw. zu pressen. Auch kann der Formkörper beispielsweise in einem Vakuumsack aus einer Kunststofffolie eingehüllt sein, wobei mittels des Vakuums eine Verdichtung des Formkörpers bei gleichzeitiger Zuführung eines Harzes zur Imprägnierung des Formkörpers erfolgen kann. Eine Härtung des Formkörpers bzw. des Matrixwerkstoffes oder Harzes kann durch eine Temperaturbeaufschlagung des verdichteten und imprägnierten Formkörpers bei beispielsweise 150 bis 250C° durchgeführt werden.

Das erfindungsgemäße Widerstandsheizelement weist eine rohrförmige Gestalt auf, wobei das Widerstandsheizelement einstückig ausgebildet ist, wobei das Widerstandsheizelement aus Siliziumcarbid gebildet ist, und wobei das Widerstandsheizelement ein homogenes Gefüge bzw. eine homogene Verteilung von Siliziumcarbid aufweist, wobei das Widerstandsheizelement durch Silizierung eines pyrolysierten Formkörpers aus einem Nadelfilz und einem Matrixwerkstoff ausgebildet ist, wobei überschüssiges Silizium aus dem Widerstandsheizelement entfernt ist, wobei eine das Widerstandsheizelement umgebende Siliziumcarbidschicht auf das Widerstandsheizelement aufgebracht ist. Insbesondere das homogene Gefüge von Siliziumcarbid innerhalb der Materialstruktur des Widerstandsheizelements bewirkt, dass eine Wahrscheinlichkeit von Rissbildung während des Betriebs des Widerstandsheizelements minimiert wird. Somit kann eine Betriebssicherheit des Widerstandsheizelements wesentlich erhöht werden.

Vorteilhaft kann das Siliziumcarbid im Werkstoff des Widerstandsheizelements entsprechend einer Faserorientierung eines Filzes strukturiert sein. So kann zur Herstellung des Widerstandsheizelementes ein Filz mit einer unstrukturierten Faserorientierung verwendet werden. In diesem Fall kann der Filz so ausgebildet sein, dass er bereits eine einstückige und rohrförmige Gestalt aufweist.

Weitere vorteilhafte Ausführungsformen eines Widerstandsheizelements ergeben sich aus den Merkmalsbeschreibungen der auf den Verfahrensanspruch 1 rückbezogenen Unteransprüche.

Im Folgenden wird die Erfindung unter Bezugnahme auf die beigefügte Zeichnung näher erläutert.

Es zeigen:
- **Fig. 1:**: Eine perspektivische Ansicht eines Widerstandsheizelements;
- **Fig. 2:**: ein Ablaufdiagramm für eine Ausführungsform des Verfahrens.

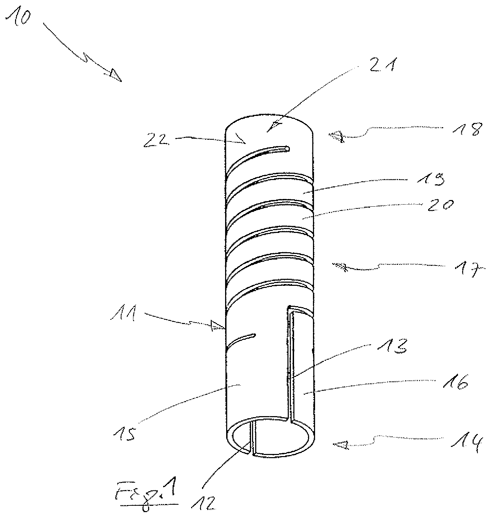

**Fig. 1** zeigt ein Widerstandsheizelement 10, welches rohrförmig, mit einem runden, kreisförmigen Querschnitt ausgebildet ist. Das Widerstandsheizelement 10 weist eine dünne Rohrwandung 11 auf, die durch zwei Schlitze 12 und 13 durchbrochen ist. Die Schlitze 12 und 13 sind im Bereich eines unteren Endes 14 des Widerstandsheizelements 10 in Längsrichtung des selben gerade ausgebildet und bilden so zwei Anschlussflächen 15 und 16 zum Anschluss des Widerstandsheizelements 10 an Anschlusskontakte einer hier nicht dargestellten Anschlussvorrichtung eines DSC-Ofens aus. In einem Mittelbereich 17 des Widerstandsheizelements 10 verlaufen die Schlitze 12 und 13 jeweils spiralförmig in Längsrichtung entlang des Umfangs der Rohrwandung 11 bis hin zu einem oberen Ende 18 des Widerstandsheizelements 10. Die Schlitze 12 und 13 bilden so zwei Heizwendel 19 und 20 aus, die an dem oberen Ende 18 in einem Ringabschnitt 21 miteinander verbunden sind. Eine Erwärmung des Widerstandsheizelements 10 während eines Betriebs erfolgt im Wesentlichen im Bereich der Heizwendel 19 und 20. Das Widerstandsheizelement ist einstückig ausgebildet und besteht im Wesentlichen aus Siliziumcarbid, wobei innerhalb des Materials des Widerstandsheizelements 10 herstellungsbedingte Restmengen von Silizium, Kohlenstoff und anderen Materialien eingebunden sein könnten. Weiter ist eine Oberfläche 22 des Widerstandsheizelements 10 nahezu vollständig mit Siliziumcarbid beschichtet, wobei im Bereich der Anschlussflächen 15 und 16 eine hier nicht näher dargestellte Schicht aus Aluminium aufgebracht ist.

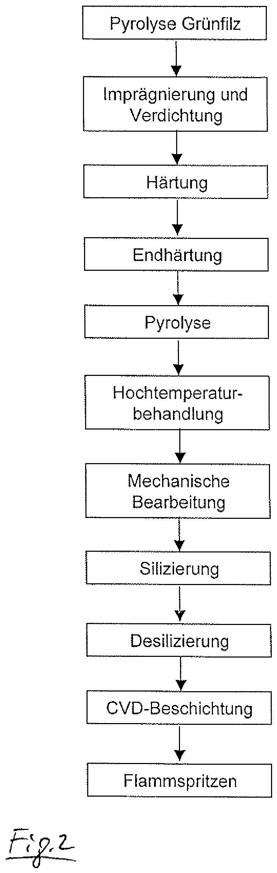

**Fig. 2** zeigt ein mögliches Ablaufdiagramm einer Ausführungsform des Verfahrens. Zunächst erfolgt eine Pyrolyse des Nadelfilzes bzw. Formkörpers und somit dessen Umwandlung in einen Formkörper aus Kohlenstofffasern. Der Formkörper wird weiter mit einem Phenolharz imprägniert und verdichtet, wobei es zur Härtung des Harzes kommt. Nach einer abschließenden Aushärtung des Harzes unter Temperatureinwirkung wird der Formkörper einer weiteren Pyrolyse zur Umwandlung des Harzes in Kohlenstoff unterworfen. Nach einer Hochtemperaturbehandlung zur Beseitigung von unerwünschten Reaktionsstoffen erfolgt eine mechanische Bearbeitung des Formkörpers, bei dem dieser seine abschließende Gestalt erhält. Insbesondere dadurch, dass der Formkörper aus vergleichsweise nämlich homogen strukturiertem Kohlenstoffmaterial besteht, wird eine Rissbildung bei der mechanischen Bearbeitung vermieden. Weiter folgt eine Silizierung bzw. Infiltration des Formkörpers aus Kohlenstoff mit Silizium sowie eine Desilizierung bzw. Entfernung überschüssigen Siliziums durch Ausgasung. Abschließend wird das so ausgebildete Widerstandsheizelement im Rahmen eines CVD-Verfahrens mit Siliziumcarbid beschichtet und Anschlussflächen des Widerstandsheizelements werden mittels Flammspritzen mit einer Aluminiumschicht versehen.

## Patentansprüche

1. Verfahren zur Herstellung eines Widerstandsheizelements, wobei das Widerstandsheizelement (10) eine rohrförmige Gestalt aufweist, wobei das Widerstandsheizelement einstückig ausgebildet ist, wobei das Widerstandsheizelement aus Siliziumcarbid besteht,
umfassend die Verfahrensschritte:
- Ausbildung eines einstückigen Formkörpers aus Fasern eines Faserwerkstoffs, wobei die Fasern eine unstrukturierte Faserorientierung aufweisen, wobei der Formkörper aus Faserwerkstoff aus einem Filz gebildet wird, wobei der Filz ein Nadelfilz ist, wobei der Formkörper einen runden Rohrquerschnitt aufweist, wobei der Formkörper eine homogene Verteilung von Fasern aufweist,
- Imprägnierung des Formkörpers mit einem Matrixwerkstoff,
- Härtung des Matrixwerkstoffs,
- Pyrolyse der Werkstoffe des Formkörpers,
- Silizierung des Formkörpers, wobei der Formkörper zu dem Widerstandsheizelement ausgebildet wird.

2. Verfahren nach Anspruch 1,
**dadurch gekennzeichnet,**
**dass** der Faserwerkstoff aus den Materialien Polyacrylnitril, Kohlenstoff, Kynol, Viskose, Siliziumoxid, Siliziumcarbid oder Aramid oder Kombinationen derartiger Fasern ausgebildet wird.

3. Verfahren nach Anspruch 1 oder 2,
**dadurch gekennzeichnet,**
**dass** der Matrixwerkstoff aus Harzen aus den Materialien Phenol, Epoxid, Polyimid, Furan, Isocyanat, Thermoplaste, Polyester oder Vinylester oder Kombinationen derartiger Harze ausgebildet wird.

4. Verfahren nach einem der vorangehenden Ansprüche,
**dadurch gekennzeichnet,**
**dass** nach der Pyrolyse eine Hochtemperaturbehandlung des Formkörpers erfolgt.

5. Verfahren nach einem der vorangehenden Ansprüche,
**dadurch gekennzeichnet,**
**dass** vor oder nach der Pyrolyse eine mechanische Bearbeitung des Formkörpers erfolgt.

6. Verfahren nach einem der vorangehenden Ansprüche,
**dadurch gekennzeichnet,**
**dass** während oder nach der Silizierung eine Desilizierung des Widerstandsheizelements (10) erfolgt.

7. Verfahren nach Anspruch 6,
**dadurch gekennzeichnet,**
**dass** nach der Desilizierung eine CVD-Beschichtung des Widerstandsheizelements mit Siliziumcarbid erfolgt.

8. Verfahren nach Anspruch 6 oder 7,
**dadurch gekennzeichnet,**
**dass** nach der Desilizierung oder der CVD-Beschichtung Anschlussflächen des Widerstandsheizelements mittels Flammspritzen beschichtet werden.

9. Verfahren nach einem der vorangehenden Ansprüche,
**dadurch gekennzeichnet,**
**dass** die Imprägnierung des Formkörpers drucklos oder mittels Vakuuminfusion erfolgt.

10. Verfahren nach einem der vorangehenden Ansprüche,
**dadurch gekennzeichnet,**
**dass** eine Verdichtung des imprägnierten Formkörpers vor der Härtung erfolgt.

11. Widerstandsheizelement (10), wobei das Widerstandsheizelement eine rohrförmige Gestalt aufweist, wobei das Widerstandsheizelement einstückig ausgebildet ist, wobei das Widerstandsheizelement aus Siliziumcarbid besteht, wobei das Widerstandsheizelement eine homogene Verteilung von Siliziumcarbid, wobei das Widerstandsheizelement durch Silizierung eines pyrolysierten Formkörpers aus einem Nadelfilz und einem Matrixwerkstoff ausgebildet ist, wobei überschüssiges Silizium aus dem Widerstandsheizelement entfernt ist, wobei eine das Widerstandsheizelement umgebende Siliziumcarbidschicht auf das Widerstandsheizelement aufgebracht ist.

12. Widerstandsheizelement nach Anspruch 11,
**dadurch gekennzeichnet,**
**dass** das Siliziumcarbid im Werkstoff des Widerstandsheizelements (10) entsprechend einer Faserorientierung eines Filzes strukturiert ist.

## Claims

1. A method for producing a resistance heating element, said resistance heating element (10) having a tubular shape, said resistance heating element being formed in one piece, said resistance heating element consisting of silicon carbide,
comprising the following method steps:
- forming a one-piece molded body from fibers of a fibrous material, said fibers having an unstructured fiber orientation, said molded body made of fibrous material being formed from a felt, said felt being a needled felt, said molded body comprising a round tube cross section, said molded body comprising a homogenous distribution of fibers,
- impregnating the molded body with a matrix material,
- curing the matrix material,
- pyrolizing the materials of the molded body,
- siliconizing the molded body, said molded body being formed into the resistance heating element.

2. The method according to claim 1,
**characterized in that**
the fibrous material is made of the following materials or combinations of such fibers: polyacrylonitrile, carbon, Kynol, viscose, silicon oxide, silicon carbide or aramid.

3. The method according to claim 1 or 2,
**characterized in that**
the matrix material is made of resins made of the following materials or combinations of such resins: phenol, epoxide, polyimide, furan, isocyanate, thermoplastics, polyester or vinyl ester.

4. The method according to any one of the preceding claims,
**characterized in that**
the molded body is treated with high temperature after having been pyrolized.

5. The method according to any one of the preceding claims,
**characterized in that**
the molded body is mechanically processed before or after having been pyrolized.

6. The method according to any one of the preceding claims,
**characterized in that**
the resistance heating element (10) is desiliconized while or after being siliconized.

7. The method according to claim 6,
**characterized in that**
the resistance heating element is CVD-coated with silicon carbide after having been desiliconized.

8. The method according to claim 6 or 7,
**characterized in that**
contact surfaces of the resistance heating element are coated by means of flame spraying after having been desiliconized or CVD-coated.

9. The method according to any one of the preceding claims,
**characterized in that**
the molded body is impregnated without pressure or by means of vacuum infusion.

10. The method according to any one of the preceding claims,
**characterized in that**
the impregnated molded body is compacted before being cured.

11. A resistance heating element (10), said resistance heating element having a tubular shape, said resistance heating element being formed in one piece, said resistance heating element consisting of silicon carbide, said resistance heating element having a homogenous distribution of silicon carbide, said resistance heating element being made of a needled felt and a matrix material by siliconizing a pyrolized molded body, excess silicon being removed from the resistance heating element, a silicon carbide coat surrounding the resistance heating element being applied on the resistance heating element.

12. The resistance heating element according to claim 11,
**characterized in that**
the silicon carbide in the material of the resistance heating element (10) is structured according to a fiber orientation of a felt.

## Revendications

1. Procédé pour produire un élément chauffant à résistance, ledit élément chauffant à résistance (10) ayant une forme tubulaire, ledit élément chauffant à résistance étant formé en une seule pièce, ledit élément chauffant à résistance consistant en carbure de silicium, comprenant les étapes suivantes :
- former un corps moulé en une seule pièce de fibres d'un matériau fibreux, lesdites fibres ayant une orientation des fibres mal structurée, ledit corps moulé en matériau fibreux étant formé d'un feutre, ledit feutre étant un feutre aiguilleté, ledit corps moulé ayant une section transversale de tube ronde, ledit corps moulé comprenant une distribution de fibres homogène,
- imprégner le corps moulé avec un matériau matriciel,
- durcir le matériau matriciel
- pyrolyser les matériaux du corps moulé,
- silicer le corps moulé, la forme de l'élément chauffant à résistance étant donnée audit corps moulé.

2. Procédé selon la revendication 1,
**caractérisé en ce que**
le matériau fibreux est formé en des matériaux suivants ou des combinaisons de ces fibres : polyacrylonitrile, Kynol, viscose, oxyde de silicium, carbure de silicium ou aramide.

3. Procédé selon la revendication 1 ou 2,
**caractérisé en ce que**
le matériau matriciel est formé en résines en des matériaux suivants ou des combinaisons de ces résines: phénol, époxyde, polyimide, furane, isocyanate, des matériaux thermoplastiques, polyester ou vinylester.

4. Procédé selon l'une quelconque des revendications précédentes,
**caractérisé en ce que**
le corps moulé est traité à haute température après la pyrolyse.

5. Procédé selon l'une quelconque des revendications précédentes,
**caractérisé en ce que**
le corps moulé est traité mécaniquement avant ou après la pyrolyse.

6. Procédé selon l'une quelconque des revendications précédentes,
**caractérisé en ce que**
l'élément chauffant à résistance (10) est désilicé pendant ou après la siliconisation.

7. Procédé selon la revendication 6,
**caractérisé en ce qu'**
l'élément chauffant à résistance est revêtu du carbure de silicium par CVD après la désiliconisation.

8. Procédé selon la revendication 6 ou 7,
**caractérisé en ce que**
des surfaces de contact de l'élément chauffant à résistance sont revêtues au moyen de la projection à flamme après la désiliconisation ou le revêtement par CVD.

9. Procédé selon l'une quelconque des revendications précédentes,
**caractérisé en ce que**
le corps moulé est imprégné sans pression ou au moyen de l'infusion sous vide.

10. Procédé selon l'une quelconque des revendications précédentes,
**caractérisé en ce que**
le corps moulé imprégné est compacté avant le durcissement.

11. Élément chauffant à résistance (10), ledit élément chauffant à résistance ayant une forme tubulaire, ledit élément chauffant à résistance étant formé en une seule pièce, ledit élément chauffant à résistance consistant en carbure de silicium, ledit élément chauffant à résistance ayant une distribution homogène du carbure de silicium, ledit élément chauffant à résistance étant formé en un feutre aiguilleté et en un matériau matriciel par la siliconisation d'un corps moulé pyrolysé, du silicium excédentaire étant extrait de l'élément chauffant à résistance, une couche de carbure de silicium enveloppant l'élément chauffant à résistance étant disposée sur l'élément chauffant à résistance.

12. Élément chauffant à résistance selon la revendication 11,
**caractérisé en ce que**
le carbure de silicium dans le matériau de l'élément chauffant à résistance (10) est structuré selon une orientation des fibres d'un feutre.
